# EUROPÄISCHE PATENTANMELDUNG

(11) **EP 2 353 476 A2**
(43) Veröffentlichungstag der Anmeldung: **10.08.2011**
(21) Anmeldenummer: 11151903.9
(22) Anmeldetag: 24.01.2011
(51) Int. Cl.: A47J 37/07

(54) **Vorrichtung zum Anzünden von festem Brennstoff und Brennstoffkartusche**

(30) Priorität: 28.01.2010 DE 202010001510 U
(71) Anmelder: RWE Power Aktiengesellschaft, 45128 Essen (DE)
(72) Erfinder: Lange, Raimund, 50259, Pulheim (DE)
(74) Vertreter: Heine, Christian Klaus

(57) **Zusammenfassung**

Vorrichtung (1) zum Anzünden von festem Brennstoff (2), aufweisend ein Gehäuse (3), eine in dem Gehäuse (3) angeordnete Brennkammer (19), einen verschwenkbaren Brennkammerboden (5) und eine Schließvorrichtung (6) zur Arretierung des Brennkammerbodens (5) zumindest in einer Schließstellung (21), wobei die Schließvorrichtung (6) zumindest ein in eine Schließposition (23) und eine Freigabeposition (24) verstellbares Halteelement (7) umfasst.

Die erfindungsgemäße Vorrichtung (1) zum Anzünden von festem Brennstoff (2) zeichnet sich durch eine besonders einfache und leichte Entleerung von festem Brennstoff (2) aus. Mit der erfindungsgemäßen Brennstoffkartusche (16) kann die Vorrichtung (1) zum Anzünden von festem Brennstoff (2) zudem bedarfsgerecht befüllt werden.

## Beschreibung

Die vorliegende Erfindung betrifft eine Vorrichtung zum Anzünden von festem Brennstoff und eine Brennstoffkartusche für festen Brennstoff. Die vorliegende Erfindung kommt insbesondere beim Anzünden von festem Brennstoff wie Briketts und/oder Holzkohle zum Grillen von Speisen zum Einsatz.

Das Anzünden von festem Brennstoff (Grillkohle, Holzkohle, Grillbriketts) hat sich regelmäßig als schwierig und zeitaufwendig herausgestellt. Insbesondere erfordert das Anzünden von festem Brennstoff mit Hilfe von Papier, Reisig und dünnem Holz eine besonders lange Vorbereitungszeit, insbesondere da der feste Brennstoff üblicherweise erst durchgehend glühen soll, bis mit dem Grillen begonnen werden kann. Aus diesen Gründen erfreuen sich sogenannte Anzündtöpfe einer wachsenden Beliebtheit. Herkömmliche Anzündtöpfe für festen Brennstoff umfassen regelmäßig ein aus Metall bestehendes zylindrisches Gehäuse mit einem Lochblechboden, der fest mit dem Gehäuse des Anzündtopfes verbunden ist. Zum Anzünden des festen Brennstoffes wird der Brennstoff auf den Lochblechboden geschüttet und unter Zuhilfenahme eines Anzündmittels, welches im Regelfall unterhalb des Lochblechbodens angeordnet ist, angezündet. Durch die sich im Anzündtopf entwickelnde Hitze steigt die Luft nach oben, wodurch im Anzündtopf ein Unterdruck entsteht, so dass im unteren Bereich des Anzündtopfs Luft aus der Umgebung in den Anzündtopf nachströmt. Der Anzündtopf wird dadurch kontinuierlich mit Sauerstoff aus der Umgebung durchströmt (Kamineffekt). Hierdurch wird die Zeit, bis der feste Brennstoff eine zur Zubereitung von Speisen geeignete Temperatur erreicht hat, erheblich reduziert. Sobald der feste Brennstoff eine gewünschte Durchglühung erreicht hat, wird dieser aus dem Anzündtopf in eine Feuerstelle oder Grill geschüttet. Bei diesem Entleeren des Anzündtopfes kommt es jedoch zu unerwünschtem Funkenflug, der zu Brandverletzungen, Sachschäden an Kleidung und zu einer Brandgefährdung führen kann. Zudem sind der erforderliche Kraftaufwand und die Belastungen im Handgelenk aufgrund des kombinierten translatorischen und rotatorischen Bewegungsablaufes des Handgelenks beim Entleeren des regelmäßig mehrere Kilogramm schweren Anzündtopfes nicht unerheblich.

Auch das Befüllen solcher Anzündtöpfe hat sich häufig als problematisch herausgestellt. Grillkohlen werden häufig in Verpackungseinheiten von 3 kg, 5 kg, 10 kg oder 15 kg angeboten. Dies hat zur Folge, dass Gelegenheitsanwender mit geringem Grillkohleverbrauch nach dem Grillen die verbliebene Menge in einer geöffneten Tüte lagern müssen. Ein Wiederverschließen ist herstellerseitig in der Regel nicht vorgesehen. Da viele Grillkohlen hygroskopisch sind, führt die "offene" Lagerung zu Qualitätseinbußen. Häufig führt das Handling von Grillkohlen, bspw. die Befüllung eines Anzündtopfes, zudem auch zu Verschmutzungen an Händen und Kleidung.

Aufgabe der Erfindung ist es daher, die mit Bezug auf den Stand der Technik geschilderten Probleme zumindest teilweise zu lösen und insbesondere eine Vorrichtung zum Anzünden von festem Brennstoff anzugeben, die eine besonders einfache und leichte Entleerung von festem Brennstoff ermöglicht. Zudem soll auch eine Brennstoffkartusche angegeben werden, die eine bedarfsgerechte Befüllung eines Anzündtopfes ermöglicht.

Diese Aufgaben werden gelöst mit einer Vorrichtung und eine Brennstoffkartusche mit den Merkmalen der unabhängigen Ansprüche. Weitere vorteilhafte Ausgestaltungen sind in den abhängig formulierten Ansprüchen angegeben. Es ist darauf hinzuweisen, dass die in den abhängig formulierten Ansprüchen einzeln aufgeführten Merkmale in beliebiger, technologisch sinnvoller, Weise miteinander kombiniert werden können und weitere Ausgestaltung der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Die erfindungsgemäße Vorrichtung zum Anzünden von festem Brennstoff weist ein Gehäuse, eine in dem Gehäuse angeordnete Brennkammer, einen verschwenkbaren Brennkammerboden und eine Schließvorrichtung zur Arretierung des Brennkammerbodens zumindest in einer Schließstellung auf, wobei die Schließvorrichtung zumindest ein in eine Schließposition und eine Freigabeposition verstellbares Halteelement umfasst.

Das Gehäuse der Vorrichtung zum Anzünden von festem Brennstoff, insbesondere Grillkohlen, Holzkohle oder Grillbriketts, ist bevorzugt aus einem, insbesondere metallischen, Rohr mit rundem, rechteckigem, quadratischen oder polygonalen Rohrquerschnitt und einer Wandstärke von höchstens 6 mm, bevorzugt höchstens 4 mm, besonders bevorzugt höchstens 2 mm, gebildet. Innerhalb des Gehäuses ist im Bereich einer ersten Öffnung des Gehäuses ein verschwenkbarer, insbesondere metallischer, Brennkammerboden angeordnet. Dieser Brennkammerboden ist bevorzugt an einen Innenquerschnitt des Gehäuses angepasst und weist bevorzugt Durchlässe auf, deren Größe so bemessen ist, dass diese einen Luftstrom durch das Gehäuse ermöglichen jedoch ein Durchfallen von festem Brennstoff verhindern. Mit anderen Worten ist die Größe der Durchlässe kleiner als der regelmäßig zu erwartende minimale Durchmesser des festen Brennstoffs.

Zudem ist innerhalb des Gehäuses eine Brennkammer angeordnet, die durch das Gehäuse, den Brennkammerboden und eine zweite Öffnung des Gehäuses begrenzt wird. Die Brennkammer weist ein erstes Volumen auf, das bevorzugt geeignet ist, eine für das Grillen für drei bis vier Personen ausreichende Menge festen Brennstoffes aufzunehmen. Insbesondere hat sich ein Volumen der Brennkammer als praktikabel herausgestellt, dass zur Aufnahme von 1 kg (Kilogramm) bis 6 kg, bevorzugt 1 kg bis 4 kg und besonders bevorzugt 1 kg bis 2 kg festem Brennstoff geeignet ist.

Um festen Brennstoff aus der Brennkammer zu entfernen, ist der Brennkammerboden verschwenkbar ausgeführt. Dies bedeutet, dass der Brennkammerboden aus einer Schließstellung in eine Offenstellung verschwenkt und/oder gedreht werden kann. Hierzu ist der Brennkammerboden mit zumindest einem ersten Scharnier an dem Gehäuse befestigt. Um zu verhindern, dass während des Anzündens des festen Brennstoffes eine unkontrollierte Entleerung der Brennkammer erfolgt, ist der Brennkammerboden durch eine Schließvorrichtung zumindest in einer Schließstellung arretierbar. Hierzu weist die Schließvorrichtung zumindest ein in eine Schließposition und eine Freigabeposition verstellbares Halteelement auf. Bei diesem Halteelement kann es sich insbesondere um einen Haltestift, eine Haltenase oder ein beliebiges mechanisches Element handeln, das zumindest in einer Schließstellung des Brennkammerbodens mit dem Brennkammerboden im Eingriff steht. Hierzu kann das Halteelement aus einer Freigabeposition in eine Schließposition verstellt werden. Zum Öffnen des Brennkammerbodens ist das Halteelement wieder in die Freigabeposition verstellbar, so dass der Brennkammerboden aus der Schließstellung in eine Offenstellung verschwenkbar und/oder drehbar ist. Klarzustellen ist, dass der Brennkammerboden in der Schließstellung ein Herausfallen von Brennstoff aus der Brennkammer durch die erste Öffnung des Gehäuses im Wesentlichen vollständig verhindert und der Brennkammerboden in der Offenstellung eine im Wesentlichen vollständige Entleerung der Brennkammer von Brennstoff ermöglicht. Insbesondere wird in der Offenstellung die erste Öffnung im Wesentlichen vollständig freigegeben.

Um den durch einen Kamineffekt erzeugten Luftstrom in dem Gehäuse zu beeinflussen, kann auf die zweite Öffnung des Gehäuses ein Aufsatz aufgesetzt werden. Durch einen solchen Aufsatz kann insbesondere die zweite Öffnung des Gehäuses verkleinert werden, wodurch einerseits die Strömungsgeschwindigkeit des Luftstromes im Gehäuse verringert wird und andererseits weniger Hitze aus der Brennkammer durch die zweite Öffnung des Gehäuses entweichen kann. So kann je nach verwendetem festen Brennstoff ein optimaler Luftstrom eingestellt werden.

Im Rahmen der vorliegenden Erfindung kann der Aufsatz gegen das Gehäuse verschwenkbar sein, so dass insbesondere das Gehäuse durch die zweite Öffnung befüllbar ist. Alternativ oder zusätzlich ist der Aufsatz vom Gehäuse abnehmbar. Bevorzugt weist der Aufsatz eine Sperrvorrichtung auf, die ein unbeabsichtigtes Lösen des Aufsatzes vom Gehäuse verhindert und die insbesondere als innenliegender Ring gestaltet ist. Der Aufsatz kann eine Betätigungsvorrichtung wie beispielsweise einen Griff oder ein Verbindungsmittel für eine Betätigungsvorrichtung wie einen Griff, Knauf oder ähnliches aufweisen, um auch im bereits heißen Zustand eine Verschwenkung und/oder Öffnung und/oder Schließung des Aufsatzes zu ermöglichen.

Zudem weist das Gehäuse bevorzugt einen Temperatursensor auf, so dass die Temperaturentwicklung in der Brennkammer überwacht und eine rechtzeitige Entleerung der Brennkammer erfolgen kann. Der Temperatursensor kann beispielsweise eine Beschichtung des Gehäuses zumindest in einem Teilbereich umfassen, die ihre Farbe bei Überschreiten einer bestimmten vorgegebenen Temperatur ändert.

Bevorzugt ist der Temperatursensor großflächig ausgeführt und insbesondere umlaufend um das Gehäuse, bevorzugt als eine entsprechende Beschichtung ausgeführt. Dies verhindert in vorteilhafter Weise eine nur punktuelle Messung der Temperatur, so dass fehlerhafte Einschätzungen der Temperatur vermieden werden können.

Die Erfindung hat nun den Vorteil, dass eine Entleerung der Vorrichtung zum Anzünden von festem Brennstoff deutlich sicherer erfolgen kann, weil ein Funkenflug im Wesentlichen verhindert wird. Zudem sind der Kraftaufwand und die Belastungen im Handgelenk beim Entleeren der Vorrichtung wesentlich geringer, weil der feste Brennstoff im Wesentlichen nicht angehoben werden muss und weil das Handgelenk im Wesentlichen lediglich eine translatorische Bewegung ausführen muss.

Besonders vorteilhaft ist es, wenn der Brennkammerboden durch das Halteelement in zumindest einer Schließstellung formschlüssig arretierbar ist. Hierdurch kann, insbesondere im Vergleich zu einer kraftschlüssigen Arretierung, eine besonders sichere Arretierung des Brennkammerbodens in der Schließstellung gewährleistet werden.

In Weiterbildung der Erfindung wird vorgeschlagen, dass die Vorrichtung zum Anzünden von festem Brennstoff einen Freigabebügel aufweist, wobei das Halteelement mit dem Freigabebügel aus der Schließposition in die Freigabeposition und umgekehrt verstellbar ist. Durch den vorgeschlagenen Freigabebügel ist es möglich, das Halteelement, das sich beim Anzünden des festen Brennstoffes regelmäßig hoch erhitzt, aus sicherer Entfernung in eine Schließposition oder eine Freigabeposition zu verstellen, ohne das eine Verletzungsgefahr für den Benutzer besteht. Hierzu kann der Freigabebügel an einem Ende drehbar und/oder schwenkbar an dem Gehäuse und an dem anderen Ende an dem Halteelement befestigt sein, so dass das Halteelement durch eine Drehbewegung und/oder eine Schwenkbewegung des Freigabebügels in eine Schließposition oder eine Freigabeposition verstellbar ist.

Besonders vorteilhaft ist es, wenn die Vorrichtung zumindest einen an dem Gehäuse befestigten Griff aufweist, wobei der Freigabebügel an dem Griff befestigt ist. Dies hat den Vorteil, dass die Vorrichtung zum Anzünden von festem Brennstoff und der Freigabebügel mit nur einer Hand betätigbar sind. Bevorzugt ist der Griff ortsfest an dem Gehäuse befestigt. Um die Temperatur im Bereich es Griffes und/oder des Freigabebügels zu reduzieren, kann zwischen dem Freigabebügel und dem Gehäuse ein zusätzlicher Hitzeschutz angebracht werden. Hierbei kann es sich bspw. um ein Metallblech handeln.

Ferner ist es vorteilhaft, wenn die Schließvorrichtung ein elastisches Element aufweist, durch das das Halteelement in Richtung der Schließposition verstellbar ist. Hierzu kann bspw. eine Zugfeder, die bevorzugt an dem Gehäuse befestigt ist oder eine Druckfeder, die bevorzugt am Griff befestigt ist, eingesetzt werden.

Einem weiteren Aspekt der Erfindung folgend wird auch eine Brennstoffkartusche vorgeschlagen, die ein Packmittel mit einer Vorratskammer aufweist, wobei die Vorratskammer mit festem Brennstoff gefüllt ist und entlang einer Achse Vorratskammerebenen aufweist, wobei der feste Brennstoff höchstens 90 %, bevorzugt höchstens 80 %, besonders bevorzugt höchstens 70 % einer Fläche einer beliebigen Vorratskammerebene bedeckt.

Die erfindungsgemäße Brennstoffkartusche ist insbesondere zur Anwendung in einer Vorrichtung zum Anzünden von festem Brennstoff gemäß der vorliegenden Erfindung vorgesehen.

Bei dem Packmittel handelt es sich bevorzugt um Papier, Pappe und/oder Karton, mit dem eine Vorratskammer für festen Brennstoff gebildet ist. Die Vorratskammer ist mit ausreichend festem Brennstoff gefüllt, um bis zu vier Personen mit gegrillten Speisen versorgen zu können. In diesem Zusammenhang hat sich ein Fassungsvermögen von 1 kg bis 6 kg, bevorzugt 1 kg bis 4 kg und besonders bevorzugt 1 kg bis 2 kg festem Brennstoff als praktikabel erwiesen. Das Packmittel kann sowohl eine zylindrische Form als auch eine eckige oder auch polygonale Form aufweisen, wobei mit "Form" insbesondere eine Grundfläche beziehungsweise eine Unterseite des Packmittels gemeint ist und wobei eine Oberseite und/oder die Unterseite des Packmittels verklebt, vernäht und/oder gefaltet sein kann. Die Unterseite und/oder Oberseite kann zudem insbesondere aus einem gleichen Material wie das übrige Packmittel bestehen.

Weiterhin kann die Unterseite und/oder Oberseite des Packmittels einen Deckel aufweisen, der insbesondere aus dem gleichen Material wie das Packmittel und/oder insbesondere zumindest teilweise aus Kunststoff besteht. Der Deckel ist bevorzugt wiederverschließbar. Die Brennstoffkartusche kann zudem zumindest eine an dem Packmittel befestigte Schlaufe aufweisen, mit deren Hilfe das Packmittel getragen werden kann. Je nach verwendeten Materialien des Packmittels kann es möglich sein, dass das Packmittel aus Hygiene- und/oder Umwelt- und/oder Komfortgründen nicht mit dem Brennstoff verbrannt werden kann. In diesem Fall kann die Brennstoffkartusche nach Öffnen eines Deckels auf der Oberseite des Packmittels kopfüber in eine Vorrichtung zum Anzünden von festem Brennstoff gestellt werden und anschließend mit Hilfe einer an der Unterseite des Packmittels befestigten Schlaufe oder einem Griff aus der Vorrichtung zum Anzünden von festem Brennstoff wieder herausgezogen werden.

Um einen Kamineffekt in einer Vorrichtung zum Anzünden von festem Brennstoff nicht zu unterbinden, ist es erforderlich, dass eine Packungsdichte des festen Brennstoffes in der Vorratskammer der Brennstoffkartusche nicht zu hoch ist. Hierzu ist erforderlich, dass der feste Brennstoff höchstens 90 %, bevorzugt höchstens 80 %, besonders bevorzugt höchstens 70 % der Fläche einer beliebigen zu einer Achse, insbesondere Mittelachse, des Packmittels senkrechten Querschnittsebene der Vorratskammer bedeckt. Die Querschnittsebenen verlaufen bevorzugt parallel zu der Grundfläche beziehungsweise der Unterseite des Packmittels und sind durch eine Innenkontur des Packmittels begrenzt. Mit "Bedecken" von höchstens 90 %, 80 % oder 70 % der Fläche einer beliebigen Querschnittsebene ist gemeint, dass höchstens 90 %, 80 % oder 70 % der Fläche einer beliebigen Querschnittsebene durch festen Brennstoff geschnitten wird. Dies kann insbesondere durch die Größe und/oder Formgebung des festen Brennstoffes erreicht werden. Hierzu kommen als Brennstoff insbesondere Grillbriketts, z. B. aus Braunkohlenkoks und/oder Holzkohle, mit den folgenden Abmessungen in Betracht: Breite bis zu 120 mm (Millimeter), bevorzugt ca. 50 mm, Länge bis zu 120 mm, bevorzugt ca. 45 mm. und Höhe bis zu 120 mm, bevorzugt ca. 26 mm. Grillbriketts aus Braunkohlenkoks mit einer Breite von ca. 50, einer Länge von ca. 45 mm und einer Höhe von ca. 26 mm haben beispielsweise eine durchschnittliche Masse von ca. 40 g (Gramm) pro Grillbrikett, wobei Grillbriketts aus Holzkohle regelmäßig geringfügig größer (Breite z. B. ca. 60 mm, Länge z. B. ca. 55 mm und Höhe z. B. ca. 36 mm) als die vorgenannten Grillbriketts aus Braunkohlenkoks und ggf. leichter als diese sind.

Besonders vorteilhaft ist es, wenn das Packmittel zumindest bei gefüllter Vorratskammer eigensteif ist. Hierdurch wird gewährleistet, dass eine Außenkontur der Brennstoffkartusche zumindest bei mit festem Brennstoff gefüllter Vorratskammer im Wesentlichen formstabil ist, ein Außendurchmesser der Kartusche einen gewünschten Außendurchmesser nicht übersteigt und somit die Brennstoffkartusche leicht in eine Brennkammer einer Vorrichtung zum Anzünden von festem Brennstoff eingesetzt werden kann.

Vorzugsweise ist die Brennstoffkartusche in eine Brennkammer einer Vorrichtung zum Anzünden von festem Brennstoff einsetzbar.

In Weiterbildung der Erfindung wird vorgeschlagen, dass das Packmittel eine feuchtigkeitsabweisende Beschichtung aufweist. Die Beschichtung ist vorzugsweise vorratskammerseitig auf dem Packmittel angeordnet.

In Weiterbildung der Erfindung wird vorgeschlagen, dass die Brennstoffkartusche zumindest ein Anzündhilfsmittel aufweist. Das zumindest eine Anzündhilfsmittel ist dabei bevorzugt zumindest teilweise von einer Anzündhilfsmittelverpackung umgeben und geeignet, in der Vorratskammer gelagerten festen Brennstoff zu entzünden. Die Anzündhilfsmittelverpackung kann aus Folie und/oder Papier und/oder mit Folie verschlossene Aluminiumschalen und/oder Blechschalen usw. gefertigt sein.

Ferner wird vorgeschlagen, dass das zumindest ein Anzündhilfsmittel an einer Unterseite der Brennstoffkartusche angeordnet ist. Das zumindest eine Anzündhilfsmittel ist zudem bevorzugt an der Außenseite des Packmittels der Brennstoffkartusche befestigt.

Darüber hinaus ist es vorteilhaft, wenn das zumindest eine Anzündhilfsmittel an einer Unterseite und/oder Oberseite der Brennstoffkartusche angeordnet ist.

Als besonders vorteilhaft hat sich herausgestellt, wenn das Anzündhilfsmittel zumindest teilweise aus zumindest einem der nachfolgenden Brennstoffe besteht:
- Paraffin,
- Brennpaste und
- paraffingetränkte Holzwolle.

Für das Entzünden von 2 bis 2,5 kg Grillbrikett aus Braunkohlenkoks werden z. B. ca. 4 Paraffin-Zündwürfel mit einer Masse von jeweils 12,5 g (Gramm), d. h. also insgesamt ungefähr 60 g, oder 50 bis 60 g Brennpaste oder 50 bis 60 ml Brennpaste benötigt.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: eine erste erfindungsgemäße Vorrichtung zum Anzünden von festem Brennstoff mit einem verschwenkbaren Brennkammerboden in einer Schließstellung;
- Fig. 2:: eine zweite erfindungsgemäße Vorrichtung zum Anzünden von festem Brennstoff mit einem verschwenkbaren Brennkammerboden in Offenstellung; und
- Fig. 3:: eine erfindungsgemäße Brennstoffkartusche.

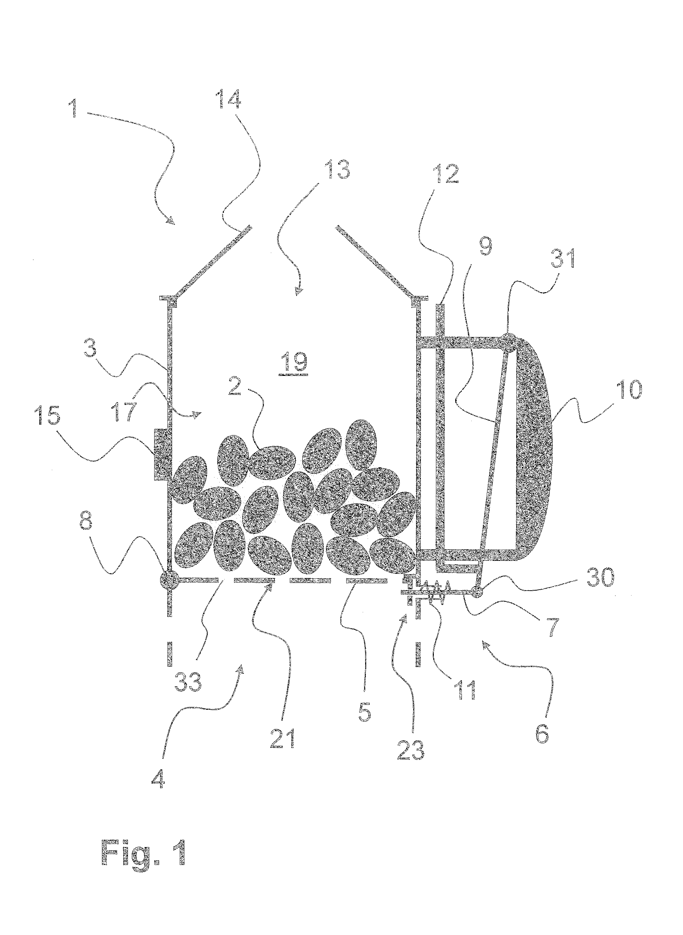

Die Fig. 1 zeigt eine Vorrichtung 1 zum Anzünden von festem Brennstoff 2. Die Vorrichtung 1 besteht aus einem Gehäuse 3, das in diesem Ausführungsbeispiel quadratisch ausgeführt ist. Ferner weist die Vorrichtung 1 einen um ein erstes Scharnier 8 verschwenkbaren Brennkammerboden 5 auf, wobei das Scharnier 8 an dem Gehäuse 3 befestigt ist. In dem in Fig. 1 gezeigten Ausführungsbeispiel befindet sich der Brennkammerboden 5 in einer Schließstellung 21, so dass eine erste Öffnung 4 des Gehäuses 3 verschlossen ist. In dem Brennkammerboden 5 sind Durchlässe 33 eingebracht, die einerseits eine Durchströmung des Gehäuses 3 mit Luft gestatten, andererseits ein Durchfallen von festem Brennstoff 2 im Wesentlichen verhindern. In dem Gehäuse 3 befindet sich zudem eine Brennkammer 19, die durch das Gehäuse 3, den verschwenkbaren Brennkammerboden 5 und eine zweite Öffnung 13 des Gehäuses 3 begrenzt wird.

In dieser Brennkammer 19, die ein erstes Volumen 17 aufweist, wird der feste Brennstoff 2 angezündet. Die zweite Öffnung 13 des Gehäuses 3 ist in diesem Ausführungsbeispiel durch einen Aufsatz 14 verjüngt. Zur Überwachung der Temperatur des festen Brennstoffes 2 ist an dem Gehäuse 3 ein Temperatursensor 15 angebracht.

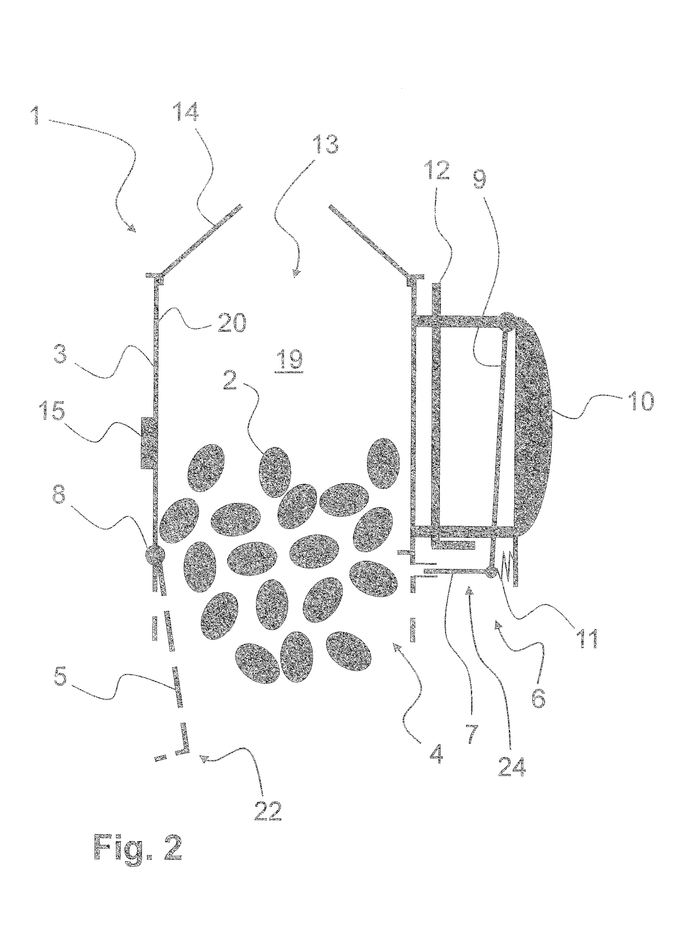

Zur Verhinderung einer unkontrollierten Verschwenkung des Brennkammerbodens 5 aus der Schließstellung 21 in eine (hier nicht gezeigte) Offenstellung 22 (vgl. Fig. 2) weist die Vorrichtung 1 eine Schließvorrichtung 6 auf. Die Schließvorrichtung 6 umfasst in diesem Ausführungsbeispiel ein als Haltestift ausgebildetes Halteelement 7. Das Halteelement 7 befindet sich hier in einer Schließposition 23, in der das Halteelement 7 formschlüssig mit dem Brennkammerboden 5 im Eingriff steht, so dass ein Verschwenken des Brennkammerbodens 5 um das erste Scharnier 8 blockiert ist. Die Vorrichtung 1 umfasst darüber hinaus einen Griff 10, der an dem Gehäuse 3, insbesondere ortsfest, befestigt ist. An diesem Griff 10 ist wiederum über ein drittes Scharnier 31 ein Freigabebügel 9 drehbar gelagert. Dieser Freigabebügel 9 ist an dem Scharnier 31 gegenüberliegenden Ende mit einem zweiten Scharnier 30 an dem Halteelement 7 befestigt. Durch Verschwenken des Freigabebügels 9 um das dritte Scharnier 31 entgegen des Uhrzeigersinnes ist das Halteelement 7 aus der hier gezeigten Schließposition 23 in eine hier nicht gezeigte Freigabeposition 24 (vgl. Fig. 2) bewegbar. Die Schließvorrichtung 6 weist darüber hinaus ein hier als Zugfeder ausgebildetes elastisches Element 11 auf, das das Halteelement 7 in der Schließposition 23 sichert beziehungsweise das Halteelement 7 aus der hier nicht gezeigten Freigabeposition 24 in die Schließposition 23 bewegt. Der Freigabebügel 9 ist zudem so an dem Griff 10 angeordnet, dass der Griff 10 und der Freigabebügel 9 bevorzugt einhändig betätigbar sind. Um eine übermäßige Hitzestrahlung auf den Freigabebügel 9 und den Griff 10 zu verhindern, ist zudem zwischen dem Gehäuse 3 und dem Freigabebügel 9 ein Hitzeschild 12 angeordnet.

Die Fig. 2 zeigt nun ein zweites Ausführungsbeispiel einer erfindungsgemäßen Vorrichtung 1 zum Anzünden von festem Brennstoff 2. Hierbei sind sämtliche Elemente, die zu dem in Fig. 1 gezeigten Ausführungsbeispiel identisch sind, mit gleichen Bezugszeichen gekennzeichnet. Es wird daher nur auf die Unterschiede des in der Fig. 2 gezeigten Ausführungsbeispieles eingegangen und im Weiteren auf die Beschreibung des Ausführungsbeispieles der Fig. 1 verwiesen.

Aus der Fig. 2 geht eine Vorrichtung 1 zum Anzünden von festem Brennstoff 2 hervor, bei der sich der Brennkammerboden 5 in einer Offenstellung 22 befindet, so dass der feste Brennstoff 2 im Wesentlichen vollständig aus der Brennkammer 19 entleert werden kann. Zur Freigabe des Brennkammerbodens 5 ist das Halteelement 7 der Schließvorrichtung 6 in eine hier gezeigte Freigabeposition 24 verstellt. In dieser Freigabeposition 24 steht das Halteelement 7 nicht mit dem Brennkammerboden 5 im Eingriff. Das Halteelement 7 ist auch in diesem Ausführungsbeispiel durch einen Freigabebügel 9 betätigbar, wobei das Halteelement 7 durch ein hier als Druckfeder ausgebildetes elastisches Element aus der Freigabeposition 24 in die (hier nicht gezeigte) Schließposition 23 führbar ist.

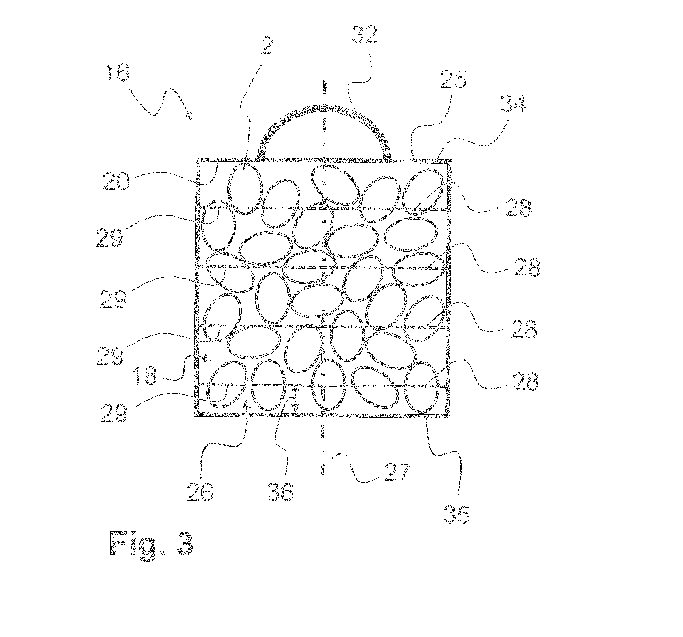

Die Fig. 3 zeigt eine erfindungsgemäße Brennstoffkartusche 16, die ein Packmittel 25 umfasst. Das Packmittel 25 weist eine Oberseite 34, an der hier eine Schlaufe 32 befestigt ist, und eine Unterseite 35 auf. Zudem umschließt das Packmittel 25 eine Vorratskammer 26 mit einem zweiten Volumen 18, das mit festem Brennstoff 2 gefüllt ist. Die Vorratskammer 26 der Brennstoffkartusche 16 weist in beliebigen Vorratskammerhöhen 36 zu einer Achse 27 der Vorratskammer 26 senkrechte und unendlich viele (fiktive) Querschnittsebenen 28 auf. Die Querschnittsebenen 28 weisen zudem eine Fläche 29 auf, die abhängig von der jeweiligen Vorratskammerhöhe 36 ist, wobei die Fläche 29 der Querschnittsebenen 28 in diesem Ausführungsbeispiel konstant ist. Wesentlich ist jedoch, dass der feste Brennstoff 2 höchstens 90 % der Fläche 29 einer beliebigen Querschnittsebene 28 bedeckt, so dass die Vorratskammer 26 ausreichend mit Sauerstoff durchströmt werden kann. Um das Packmittel 25 vor Feuchtigkeit zu schützen, weist das Packmittel 25 zumindest auf der der Vorratskammer zugewandten Seite eine feuchtigkeitsabweisende Beschichtung auf.

Die erfindungsgemäße Vorrichtung 1 zum Anzünden von festem Brennstoff 2 zeichnet sich durch eine besonders einfache und leichte Entleerung von festem Brennstoff 2 aus. Mit der erfindungsgemäßen Brennstoffkartusche 16 kann die Vorrichtung 1 zum Anzünden von festem Brennstoff 2 zudem bedarfsgerecht befüllt werden.

### Bezugszeichenliste

- 1: Vorrichtung
- 2: fester Brennstoff
- 3: Gehäuse
- 4: erste Öffnung
- 5: Brennkammerboden
- 6: Schließvorrichtung
- 7: Halteelement
- 8: erstes Scharnier
- 9: Freigabebügel
- 10: Griff
- 11: elastisches Element
- 12: Hitzeschild
- 13: zweite Öffnung
- 14: Aufsatz
- 15: Temperatursensor
- 16: Brennstoffkartusche
- 17: erstes Volumen
- 18: zweites Volumen
- 19: Trennkammer
- 20: Beschichtung
- 21: Schließstellung
- 22: Offenstellung
- 23: Schließposition
- 24: Freigabeposition
- 25: Packmittel
- 26: Vorratskammer
- 27: Achse
- 28: Querschnittsebene
- 29: Fläche
- 30: zweites Scharnier
- 31: drittes Scharnier
- 32: Schlaufe
- 33: Durchlass
- 34: Oberseite
- 35: Unterseite
- 36: Vorratskammerhöhe

## Patentansprüche

1. Vorrichtung (1) zum Anzünden von festem Brennstoff (2), aufweisend ein Gehäuse (3), eine in dem Gehäuse (3) angeordnete Brennkammer (19), einen verschwenkbaren Brennkammerboden (5) und eine Schließvorrichtung (6) zur Arretierung des Brennkammerbodens (5) zumindest in einer Schließstellung (21), wobei die Schließvorrichtung (6) zumindest ein in eine Schließposition (23) und eine Freigabeposition (24) verstellbares Halteelement (7) umfasst.

2. Vorrichtung (1) nach Patentanspruch 1, wobei der Brennkammerboden (5) mit zumindest einem ersten Scharnier (8) an dem Gehäuse (3) befestigt ist.

3. Vorrichtung (1) nach einem der vorhergehenden Patentansprüche, wobei der Brennkammerboden (5) durch das Halteelement (7) in zumindest einer Schließstellung (21) formschlüssig arretierbar ist.

4. Vorrichtung (1) nach einem der vorhergehenden Patentansprüche, aufweisend einen Freigabebügel (9), wobei das Halteelement (7) mit dem Freigabebügel (9) aus der Schließposition (23) in die Freigabeposition (24) verstellbar ist.

5. Vorrichtung (1) nach Patentanspruch 4, aufweisend zumindest einen an dem Gehäuse (3) befestigten Griff (10), wobei der Freigabebügel (9) an dem Griff (10) befestigt ist.

6. Vorrichtung (1) nach einem der vorhergehenden Patentansprüche, wobei die Schließvorrichtung (6) ein elastisches Element (11) aufweist, durch das das Halteelement (7) in Richtung der Schließposition verstellbar ist.

7. Brennstoffkartusche (16), aufweisend ein Packmittel (25) mit einer Vorratskammer (26), wobei die Vorratskammer (26) mit festem Brennstoff (2) gefüllt ist und entlang einer Achse (27) Querschnittsebenen (28) aufweist, wobei der feste Brennstoff (2) höchstens 90 % einer Fläche (29) einer jeden Querschnittsebene (28) bedeckt.

8. Brennstoffkartusche (16) nach Patentanspruch 7, wobei das Packmittel (25) zumindest bei gefüllter Vorratskammer (26) eigensteif ist.

9. Brennstoffkartusche (16) nach einem der Patentansprüche 7 oder 8, wobei die Brennstoffkartusche (16) in eine Brennkammer (19) einer Vorrichtung (1) zum Anzünden von festem Brennstoff (2) einsetzbar ist.

10. Brennstoffkartusche (16) nach einem der vorhergehenden Ansprüche, wobei das Packmittel (25) eine feuchtigkeitsabweisende Beschichtung (20) aufweist.

11. Brennstoffkartusche (16) nach einem der vorhergehenden Ansprüche, aufweisend zumindest ein Anzündhilfsmittel.

12. Brennstoffkartusche (16) nach Anspruch 11, wobei das zumindest eine Anzündhilfsmittel an einer Unterseite (35) und/oder Oberseite (34) der Brennstoffkartusche (16) angeordnet ist.

13. Brennstoffkartusche (16) nach Anspruch 11 oder 12, wobei das Anzündhilfsmittel zumindest teilweise aus zumindest einem der nachfolgenden Brennstoffe besteht:
- Paraffin,
- Brennpaste, oder
paraffingetränkte Holzwolle.
